(19) Europäisches Patentamt
European Patent Office
Office européen des brevets

(11) **EP 3 640 685 A1**

(12) **EUROPEAN PATENT APPLICATION**
published in accordance with Art. 153(4) EPC

(43) Date of publication:
22.04.2020 Bulletin 2020/17

(51) Int Cl.:
*G01W 1/00* (2006.01)          *B60C 19/00* (2006.01)
*B60W 40/068* (2012.01)

(21) Application number: 18818142.4

(22) Date of filing: 26.04.2018

(86) International application number:
PCT/JP2018/017083

(87) International publication number:
WO 2018/230181 (20.12.2018 Gazette 2018/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 16.06.2017 JP 2017119103

(71) Applicant: Bridgestone Corporation
Tokyo 104-8340 (JP)

(72) Inventors:
• ISHII Keita
  Tokyo 104-8340 (JP)
• MASAGO Takeshi
  Tokyo 104-8340 (JP)
• GOTO Takato
  Tokyo 104-8340 (JP)

(74) Representative: Oxley, Robin John George
Marks & Clerk LLP
15 Fetter Lane
London EC4A 1BW (GB)

(54) **ROAD SURFACE STATE DETERMINATION METHOD AND ROAD SURFACE STATE DETERMINATION DEVICE**

(57)     A method for determining a state of a road surface in which, a time-series waveform of tire vibration detected by an acceleration sensor is windowed by a windowing means with a time T and a feature vector Xi in each time window is calculated through the extraction of a time-series waveform of the tire-vibration in each time window. Thereafter, in the calculation of a kernel function $K_A$ from the feature vector Xi in each time window and a road surface feature vector $Y_{Aj}$ that is a feature vector in each time window calculated from a time-series waveform of tire-vibration that has been calculated in advance for each road surface state, the feature vector $X_i$ in each time window and the road-surface feature vector $Y_{Aj}$ are made to be vibration levels of frequency bands of 500 Hz or greater extracted from the time-series waveform in each time window.

FIG.8

```
                    ( START )
                              S 1 0
   DETECT TIRE VIBRATION
   BY ACCELERATION SENSOR
                              S 1 1
   EXTRACT TIME-SERIES WAVEFORM OF
   TIRE VIBRATION
                              S 1 2
   WINDOWS WITH TIME WIDTH T TO EXTRACT
   TIME-SERIES WAVEFORM FOR
   EACH TIME WINDOW
                              S 1 3
   CALCULATE FEATURE
   VECTOR Xi
                              S 1 4
   CALCULATE GA KERNEL K_A(X,Y)
   A=DRY, WET
                              S 1 5
   CALCULATE DISCRIMINANT
   FUNCTION f_DW
                              S 1 6
   DETERMINE ROAD
   SURFACE STATE

                    ( END )
```

**Description**

TECHNICAL FIELD

The present invention relates to a method and a device for determining a state of a road surface on which a vehicle travels, and more specifically, relates to a method for determining the road surface using only data of a time-series waveform of vibration of a running tire.

BACKGROUND

Conventionally, as a method for determining a state of a road surface by using only data of a time-series waveform of vibration of a running tire, there has been proposed a method in which a state of a road surface is determined by using a kernel function which is calculated from feature amounts in respective time windows calculated from time-series waveforms extracted by multiplying the time-series waveform of the tire vibration by a window function and from reference feature amounts which are feature amounts in the respective time windows obtained in advance for respective road surface states.

The reference feature amounts are obtained by machine learning (SVM) using, as learning data, the feature amount in each time window calculated from the time-series waveform of the tire vibration obtained in advance for each of road surface states (see Patent Document 1, for example).

CITATION DOCUMENT

Patent Document

Patent Document 1: Japanese Unexamined Patent Application Publication No. 2014-35279

SUMMARY OF THE INVENTION

Technical Problem

However, in the conventional method, because a time stretching/contraction requires a significant amount of calculations even for determining two road surfaces of DRY/WET, there have been problems that the calculation takes a long time and the processing becomes very heavy.

The present invention has been made in view of the conventional problems and aims at improving the calculation speed by reducing the amount of calculations while securing the precision in determination of two road surfaces of DRY/WET, by suitably selecting a feature amount to be used for calculation of the kernel function.

Solution to Problem

The inventors have found, as a result of earnest examinations, that by detecting vibration of a tire generated at the time the tire collides with water on a road surface when the tire is running on the road surface, it is possible to determine whether the road surface is a WET road surface where a water curtain exists in a certain degree that causes generation of the tire vibration or a DRY road surface where the water curtain does not exist, and thus the inventors have reached the present invention.

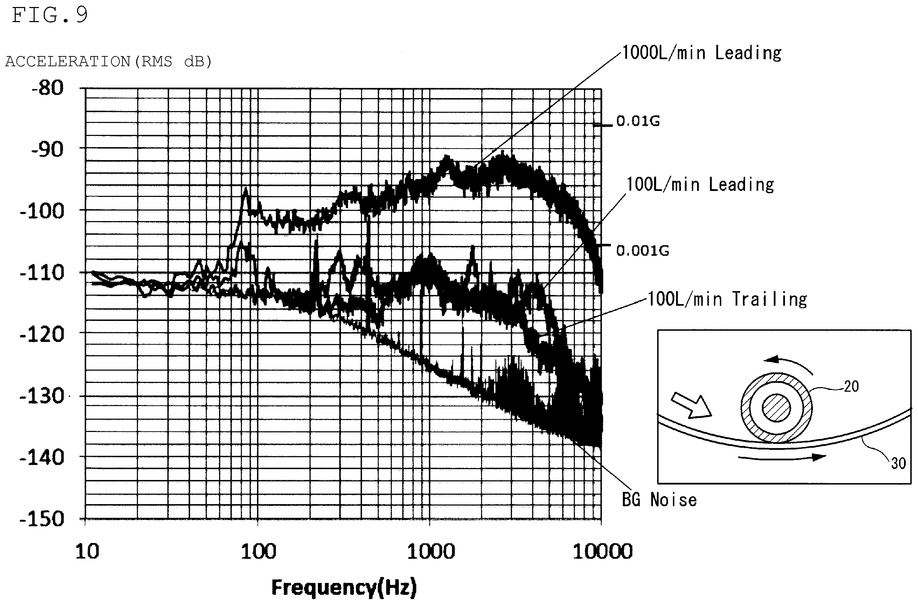

Fig. 9 illustrates frequency spectra of the tire vibration generated when the water flow of 100[l/min] or 1000[l/min], indicated by a void arrow, collides with a tire 20 fixed in a drum 30, in which the horizontal axis represents frequency [Hz] and the vertical axis represents acceleration [RMS dB]. Fig. 9 shows results of a case in which an acceleration sensor attached to the inside of the tire is in a leading position or in a trailing position.

From Fig. 9, it is noted that, in regions of a high frequency of 500 Hz or greater, a difference between a vibration level at the time of collision with the water on the road surface and a background level (BG Noise) without collision with the water is large.

Accordingly, when determining the state of the road surface using a kernel function, it is possible to improve the calculation speed by reducing the amount of calculations while securing the precision in determination of two road surfaces of DRY/WET, if only vibration levels of the frequency band of 500 Hz or greater are used as feature amounts for determination of the road surface, among the feature amounts extracted from the time-series waveform of the tire vibration.

Namely, the present invention relates to a method for determining a state of a road surface being in contact with a running tire, the method including: a step (a) of detecting vibration of the running tire with the use of a vibration detecting means provided inside of the tire; a step (b) of taking out a time-series waveform of the detected tire vibration; a step (c) of extracting a time-series waveform for each time window by multiplying the time-series waveform of the tire vibration by a window function of a predetermined time width; a step (d) of calculating a feature amount from the time-series waveform in each time window; a step (e) of calculating a kernel function from the feature amount in each time window calculated in the step (d) and a reference feature amount selected from feature amounts in the respective time windows calculated from a time series waveform of tire vibration obtained in advance for each road surface state,; and a step (f) of determining the state of the road surface based on a value of a discriminant function using the kernel function, in which the feature amount in each time window calculated in the step (d) and the reference feature amount are either one of, or a plurality of, or all of a vibration level of a frequency band of 500Hz or greater extracted from the time-series waveform in each time window, a time-varying dispersion of the vibration level of the frequency band, and a Cepstrum coefficient of the time-series waveform; and in which the step (f) includes determining whether the state of the road surface is a WET state in which a water curtain that collides with the running tire exists on the road surface, or a DRY state in which the water curtain does not exist.

Further, the present invention also relates to a road surface state determination device for determining a state of a road surface being in contact with a running tire, the device including: a tire vibration detecting means that is disposed on an air chamber side of an inner liner portion of a tire tread portion and that detects vibration of the running tire; a windowing means that windows, with a previously set time width, a time-series waveform of the tire vibration detected by the tire vibration detecting means to extract a time-series waveform of the tire vibration for each time window; a feature amount calculating means that calculates a feature amount having, as a component thereof, a vibration level of a specific frequency in the extracted time-series waveform in each time window, or a feature amount having, as a component thereof, a function of the vibration level of the specific frequency; a storage means that stores a reference feature amount selected from feature amounts in respective time windows calculated from a time-series waveform of tire vibration that has been calculated in advance for each road surface state; a kernel function calculating means that calculates a kernel function from the feature amount in each time window calculated by the feature amount calculating means and the reference feature amount stored in the storage means; and a road surface state determining means that determines the state of the road surface based on a value of a discriminant function using the kernel function, in which the feature amount in each time window calculated by the feature amount calculating means and the reference feature amount stored in the storage means are either one of, or a plurality of, or all of a vibration level of a frequency band of 500Hz or greater extracted from the time-series waveform in each time window, a time-varying dispersion of the vibration level of the frequency band and a Cepstrum coefficient of the time-series waveform; and in which the road surface state determining means determines whether the state of the road surface is a WET state in which a water curtain that collides with the running tire exists on the road surface, or a DRY state in which the water curtain does not exist.

The summary of the invention does not enumerate all the features required for the present invention, and sub-combinations of these features may also become the invention.

BRIEF DESCRIPTION OF THE DRAWINGS

FIG. 1 is a functional block diagram illustrating a configuration of a road surface condition determination device according to an exemplary embodiment of the present invention;
FIG. 2 s a diagram illustrating an example of a mounting position of an acceleration sensor;
FIG. 3 is a diagram illustrating an example of a time-series waveform of tire vibration;
FIG. 4 is a diagram illustrating a method for calculating feature vectors from the time-series waveform of the tire vibration;
FIG. 5 is a diagram illustrating an input space;
FIG. 6 is a diagram illustrating a road surface feature vector of a DRY road surface and a road surface feature vector of a WET road surface in the input space;
FIG. 7 is a diagram illustrating a method for calculating a GA kernel;
FIG. 8 is a flowchart illustrating a method for determining a road surface state according to the exemplary embodiment of the present invention;
FIG. 9 is a diagram illustrating an example of frequency spectrum of the tire vibration generated when a water flow collides with the tire; and
FIG. 10 is a graph illustrating a relationship between a mounting position of the acceleration sensor and a determination precision.

DESCRIPTION OF EMBODIMENT

Although the present invention is herein described in detail through an exemplary embodiment, however, the exemplary embodiment described below does not limit the inventions set forth in the claims, and not all of the combinations of the features described in the exemplary embodiment are necessarily required for the solving means of the invention.

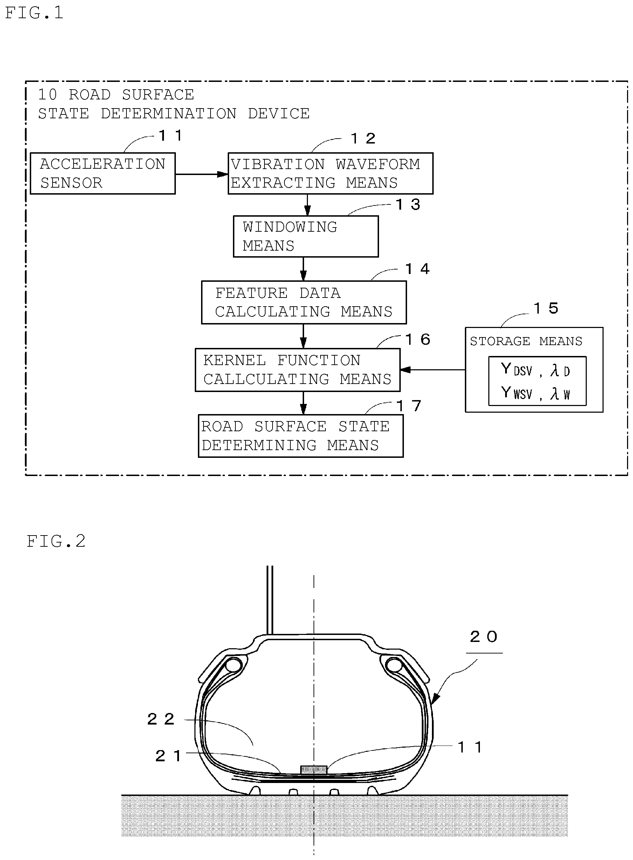

FIG. 1 is a functional block diagram illustrating a configuration of a road surface state determination device 10.

The road surface state determination device 10 includes an acceleration sensor 11 as a tire vibration detecting means, a vibration waveform extracting means 12, a windowing means 13, a feature vector calculating means 14, a storage means 15, a kernel function calculating means 16, and a road surface state determining means 17, and determines whether the road surface on which a tire is running is a Wet state in which a water curtain that collides with the running tire exists on the road surface, or a DRY state in which the water curtain does not exist.

The vibration waveform extracting means 12 to the road surface state determining means 17 are each configured, for example, by computer software and a memory such as a RAM.

The acceleration sensor 11 is, as illustrated in Fig. 2, disposed integrally with an inner liner portion 21 of the tire 20 in a substantially central portion on a tire air chamber 22 side, for detecting vibration of the tire 20 due to the input from the road surface. A signal of the tire vibration, which is an output of the acceleration sensor 11, is, for example, amplified by an amplifier, thereafter converted into a digital signal and sent to the vibration waveform extracting means 12.

The vibration waveform extracting means 12 extracts, for each one rotation of the tire, a time-series waveform of the tire vibration, from the signal of the tire vibration detected by the acceleration sensor 11.

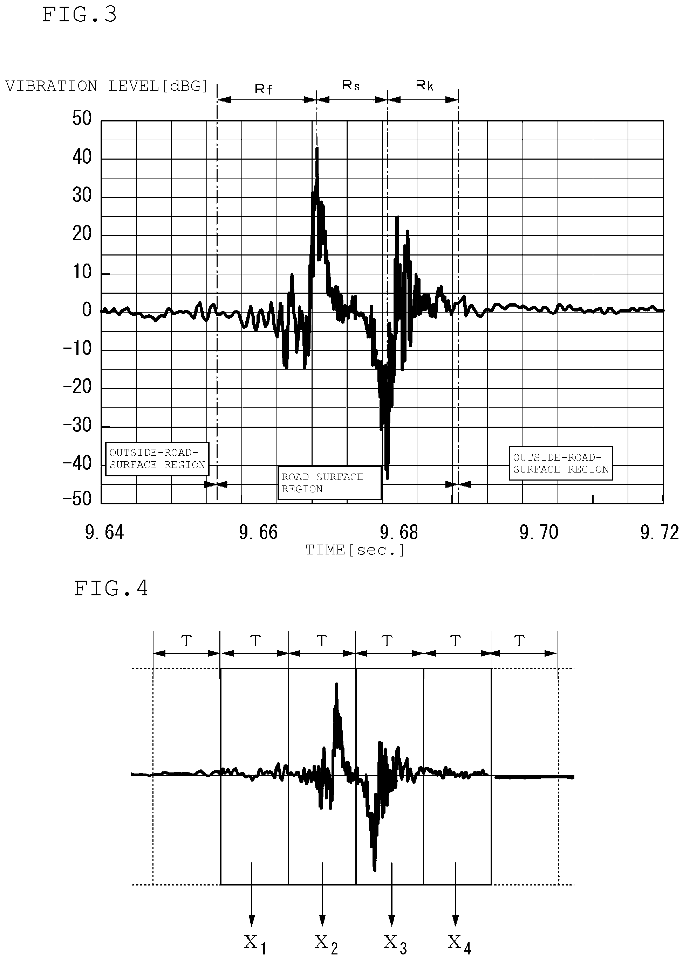

FIG. 3 is a diagram illustrating an example of the time-series waveform of the tire vibration. The time-series waveform of the tire vibration has large peaks in the vicinity of a step-in position and in the vicinity of a kick-out position, and in a pre-step-in region $R_f$ that is a region before a land portion of the tire 20 contacts the ground, in a post-kick-out region $R_k$ that is a region after the land portion of the tire 20 is left from the road surface and in a grounding region $R_s$ that is a region where the land portion of the tire 20 is in contact with the ground, different vibrations appear depending on road surface states. On the other hand, because a region before the pre-step-in region $R_f$ and a region after the post-kick-out region $R_k$ (hereinafter referred to outside-road-surface regions) are not substantially affected by the influence of the road surface, vibration levels of these regions are low and information on the road surface is not included.

As illustrated in Fig. 3, in a case where a water curtain that collides with the running tire exists, vibration levels of the pre-step-in region $R_f$ and the post-kick-out region $R_k$ are high compared to a case where the water curtain does not exist. However, in the present exemplary embodiment, a time-series waveform of a road surface region (a region from the pre-step-in region $R_f$ to the post-kick-out region $R_k$) is extracted from the time-series waveform of the tire vibration.

The windowing means 13, as illustrated in FIG. 4, windows the extracted time-series waveform by a previously set time width (also called as a time window width) T, extracts a time-series waveform of the tire vibration for each time window and sends the extracted time-series waveforms to the feature vector calculating means 14.

Incidentally, as described above, since the time-series waveforms of the outside-road-surface regions do not include the information on the road surface, in the present exemplary embodiment, only the time-series waveform of the road surface region is sent to the feature vector calculating means 14 so as to accelerate the speed of calculation of the kernel function.

Meantime, the outside-road-surface region may be defined in such a manner that, for example, a background level is set for the time-series waveform of the tire vibration, and a region having a vibration level lower than the background level is determined to be the outside-road-surface region.

The feature vector calculating means 14, as illustrated in Fig. 4, calculates a feature vector $X_i$ (i = 1-N: N is the number of the extracted time-series waveforms in the time windows) for each of the extracted time-series waveforms in each time window.

In the present exemplary embodiment, as the feature vector $X_i$ to be calculated, vibration levels (power values of filter filtration waves) $a_{ik}$ (k = 1-3) of specific frequency bands obtained by allowing the time-series waveform of the tire vibration to pass through respective band path filters of 2-3 kHz, 3-4 kHz and 4-5 kHz, were used.

The feature vector is $X_i = (a_{i1}, a_{i2}, a_{i3})$, and the number of the feature vectors $X_i$ is N.

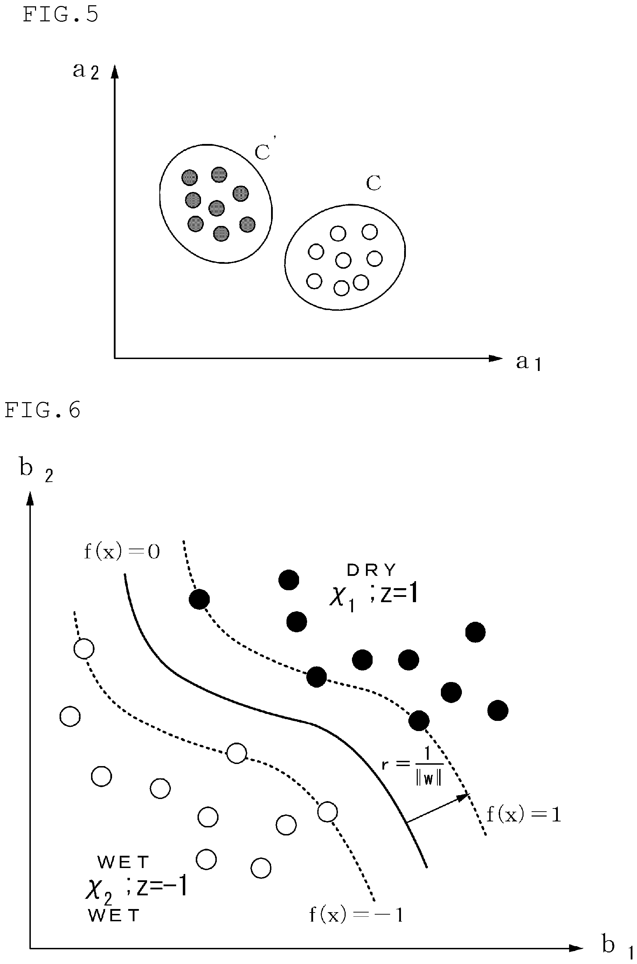

Fig. 5 is a diagram illustrating an input space of the feature vector $X_i$, and each axis represents the vibration levels $a_{ik}$ of the specific frequency bands that are the feature amounts, and each dot represents the feature vector $X_i$. An actual input space becomes a four-dimensional space, when a time axis is added, as the number of the specific frequency bands is three, however, Fig. 4 illustrates in two dimensions (the horizontal axis is $a_1$, the vertical axis is $a_2$).

In Fig. 5, let a group C be aggregation of the feature vectors $X_i$ when running on a DRY road surface and a group C' be aggregation of feature vectors $X'_i$ when running on a WET road surface, and if the group C is distinguishable from the group C', it is possible to determine whether the road surface on which the tire is running is the DRY road surface or the WET road surface.

Here, the "WET road surface" refers to a road surface where the water curtain that collides with the running tire exists and the "DRY road surface" refers to a road surface where the water curtain does not exist.

The storage means 15 stores reference feature vectors $Y_{ASV}$ ($y_{jk}$), which have been obtained in advance and which are reference feature amounts for separating the DRY road surface and the WET road surface by a discriminant function f (x) representing a separate hyperplane, and a Lagrange multiplier $\lambda_A$ for weighting the reference feature vectors $Y_{ASV}$.

The reference feature amounts ($Y_{ASV}$ ($y_{jk}$) and $\lambda_A$) are obtained by learning using, as input data, road surface feature vectors $Y_A$ ($y_{jk}$), which are each a feature vector in each time windows, calculated from time-series waveforms of the tire vibration obtained by running, on the DRY road surface and the WET road surface at various speeds, a test vehicle loaded with a tire having the acceleration sensor attached thereto.

The tire size to be used in the learning may be one type or may be plural types.

The suffix A of the reference feature vector $Y_{ASV}$ ($y_{jk}$) represents DRY or WET.

The suffix j (j = 1-M) represents a window number of the time-series waveform extracted for each time window, and the suffix k represents a vector component (k = 1-3). Namely, $y_{jk}$ = ($a_{ji}$, $a_{j2}$, $a_{j3}$). Further, SV is an abbreviation for the support vector.

Incidentally, in a case where the global alignment kernel function is used, as in the present exemplary embodiment, the reference feature vectors $Y_{ASV}$ ($y_{jk}$) become matrixes of the number of dimensions (here, 3 x M (M: the number of windows) of the vector yi.

Hereinafter, the road surface feature vector $Y_A$ ($y_{jk}$) and the reference feature vector $Y_{ASV}$ ($y_{jk}$) are expressed as $Y_A$ and $Y_{ASV}$, respectively.

The method for calculating the road surface feature vector $Y_A$ is such that, as similar to the above-described feature vector $X_j$, for a reference feature vector $Y_D$ of the DRY road surface, for example, the time-series waveform of the tire vibration when running on the DRY road surface is windowed by the time width T to extract a time-series waveform of the tire vibration for each time window, and the DRY road surface feature vector $Y_D$ is calculated for each of the extracted time-series waveforms in each time window. Similarly, a WET road surface feature vector $Y_W$ is calculated from each of the time-series waveforms in each time window when running on the WET road surface.

The reference feature vectors $Y_{ASV}$ are feature vectors selected as support vectors by the support vector machine (SVM) using, as learning data, the DRY road surface feature vector $Y_D$ and the WET road surface feature vector $Y_W$.

Incidentally, all of the reference feature vectors $Y_{ASV}$ are not necessarily stored in the storage means 15, in general, it is sufficient to store only the support vectors $Y_{ASV}$ whose Lagrange multiplier $\lambda$ has a predetermined value $\lambda_{min}$ (for example, $\lambda_{min}$ = 0.05) or greater, as the reference feature vectors $Y_{ASV}$.

Here, it is vital that the time width T is the same value as the time width T for obtaining the feature vector Xj. When the time width T is constant, the number M of the time-series waveforms in the time windows differs depending a tire type and a vehicle speed. That is, the number M of the time-series waveforms in the time windows of the road surface feature vector $Y_A$ do not necessarily coincide with the number N of the time-series waveforms in the time windows of the feature vector $X_j$. For example, in a case where a vehicle speed when obtaining the feature vector $X_j$ is slower than a vehicle speed when obtaining the road surface feature vector $Y_A$, M>N holds, and when faster, M<N holds.

FIG. 6 is a conceptual diagram illustrating the DRY road surface feature vector $Y_D$ and the WET road surface feature vector $Y_W$ in the input space. In FIG. 6, the black dot represents the DRY road surface and the white dot represents the WET road surface.

As described above, the DRY road surface feature vector $Y_D$ and the WET road surface feature vector $Y_W$ are both matrixes, however, for explaining the manner of obtaining discrimination boundaries of groups, the DRY road surface feature vector $Y_D$ and the WET road surface feature vector $Y_W$ are shown in two-dimensional vectors, respectively.

Generally, linear separation of the discrimination boundaries of the groups is impossible. Therefore, the linear separation is performed, with the use of the kernel method, by mapping the road surface feature vectors $Y_D$ and Yw into a high-dimensional feature space by non-linear map $\varphi$, so as to perform non-linear classification for the road surface feature vectors $Y_D$ and $Y_W$ in the original input space.

To distinguish the DRY road surface from the WET road surface, a margin is given to a discriminant function f (x), which is the separation hyperplane that separates the DRY road surface feature vector $Y_D$ from the WET road surface feature vector $Y_W$, whereby the DRY road surface and the WET road surface are precisely distinguished.

The margin refers to a distance to a sample that is nearest from the separation hyperplane, and the separation hyperplane, which is the discrimination boundary, is f (x) = 0. Further, all the DRY load surface feature vectors $Y_{Dj}$ exist in the region of f (x) = $\geqq$ +1, and all the WET road surface feature vectors $Y_{Wj}$ exist in the region of f (x) $\leqq$ -1.

Next, by using aggregation of data X = ($x_1$, $x_2$, ...... $x_n$) and belonging classes z = {1, -1}, an optimum discriminant function f (x) = $w^T \varphi$ (x) - b for discriminating data is obtained. Here, w is a vector representing a weighting factor and b is a constant.

The data are the DRY road surface feature vector $Y_{Dj}$ and the WET road surface feature vector $Y_{Wj}$. As to the belonging class, z = 1 represents data of the DRY road surface indicated by $\chi_1$, and z = -1 represents data of the WET road surface indicated by $\chi_2$ in FIG. 6. Further, f (x) = 0 is the discrimination boundary and 1 / | | w | | is a distance between the road surface feature vector $Y_{Aj}$ (A = D, W) and f (x) = 0.

The discriminant function f (x) = $w^T \varphi(x)$ - b is optimized, by using the Lagrange undetermined multiplier method, for example. The optimization problem is replaced with the following equations (1) and (2).

[Math. 1]

$$\text{maximize} \quad \sum_{\alpha} \lambda_{\alpha} - \frac{1}{2} \sum_{\alpha, \beta} \lambda_{\alpha} \lambda_{\beta} z_{\alpha} z_{\beta} \phi^T(x_{\alpha}) \phi(x_{\beta}) \quad \cdots\cdots (1)$$

$$\text{subject to} \quad \sum_{\alpha} \lambda_{\alpha} z_{\alpha} = 0 \ , \ \lambda_{\alpha} > 0 \quad \cdots\cdots (2)$$

Here, $\alpha$ and $\beta$ are indices of plural learning data. Also, $\lambda$ is the Lagrange multiplier, and the road surface feature vector $Y_{Aj}$ whose $\lambda$ = 0 is vector data that is not involved in (not the support data) the discriminant function f (x).

At this time, by replacing an inner product $\varphi^T(x_{\alpha})\varphi(x_{\beta})$ with the kernel function K $(x_{\alpha}, x_{\beta})$, the discriminant function f (x) = $w^T\varphi(x)$ - b can be non-linearized.

The $\varphi^T(x_{\alpha})\varphi(x_{\beta})$ is the inner product obtained after mapping the $x_{\alpha}$ and the $x_{\beta}$ by the map $\varphi$ into a high-dimensional space.

The Lagrange multiplier $\lambda$ can be obtained by using, in the equation (2), an optimization algorithm such as the steepest descent method, the sequential minimal optimization (SMO) and the like. In this manner, by replacing to the kernel function K $(x_{\alpha}, x_{\beta})$ without directly obtaining the inner product $\varphi^T(x_{\alpha})\varphi(x_{\beta})$, it becomes unnecessary to directly obtain an inner product of high dimensions. Accordingly, the calculation time can be reduced remarkably.

In the present exemplary embodiment, as the kernel function K $(x_{\alpha}, x_{\beta})$, a global alignment kernel function (GA kernel) is used.

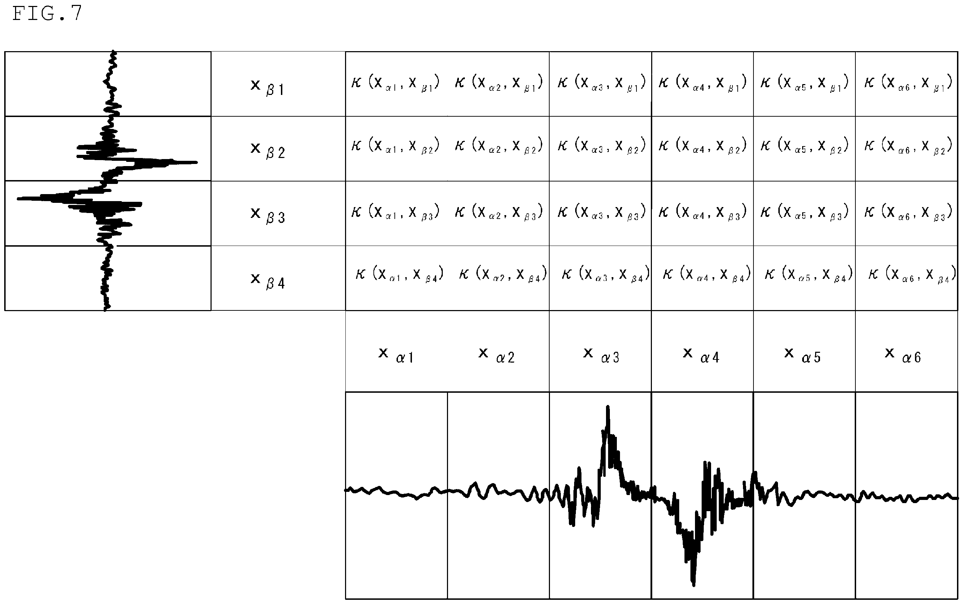

The GA kernel K $(x_{\alpha}, x_{\beta})$ is, as shown in Fig. 7 and the following equations (3) and (4), a function formed of a total sum or a total product of local kernels $K_{ij}(x_{\alpha i}, x_{\beta j})$ indicating a degree of similarity of the feature vector $x_{\alpha}$ and the feature vector $x_{\beta}$, which makes it possible to directly compare time-series waveforms having different time lengths. The local kernels $K_{ij} (x_{\alpha i}, x_{\beta j})$ can be obtained for each time width T.

Fig. 7 illustrates an example of a case where the GA kernel is obtained from the feature vector $x_{\alpha i}$ whose number of windows is six (6) and the feature vector $x_{\beta j}$ whose number of windows is four (4).

[Math 2]

$$K(x_{\alpha}, x_{\beta}) = \sum_{i=1}^{m} \sum_{j=1}^{n} \kappa_{ij}(x_{\alpha i}, x_{\beta j}) \quad \cdots\cdots (3)$$

$$\kappa_{ij}(x_{\alpha i}, x_{\beta j}) = \exp\left(-\frac{\|x_{\alpha i} - x_{\beta j}\|^2}{\sigma^2}\right) \quad \cdots\cdots (4)$$

Here, $\|x_{\alpha i}, x_{\beta j}\|$ is a distance (norm) between the feature vectors and $\sigma$ is a constant.

The kernel function calculating means 16 calculates DRY GA kernels $K_D$ (X, $Y_{DSV}$) and WET GA kernels $K_W$ (X, $Y_{WSV}$), from the feature vector Xi calculated by the feature vector calculating means 14 and the reference feature vector $Y_{DSV}$ of the DRY road surface and the reference feature vector $Y_{WSV}$ of the WET road surface that are stored in the storage means 15.

The DRY GA kernel $K_D$ (X, $Y_{DSV}$) is a function formed of a total sum or a total product of local kernels $K_{ij}$ ($X_i$, $Y_{DSVj}$), which are obtained when the feature vector $x_{\alpha}$ in the above equations (3) and (4) is replaced with the feature vector $X_i$ calculated by the feature vector calculation means 14 and the feature vector $x_{\beta}$ in the above equations (3) and (4) is replaced with the reference feature vector $Y_{DSVj}$ of the DRY road surface, and the WET GA kernel $K_W$ (X, $Y_{WSV}$) is a function formed of a total sum or a total product of local kernels $K_{ij}$ ($X_i$, $Y_{WSVj}$) when the feature vector $x_{\beta}$ is replaced with the reference feature vector $Y_{WSVj}$ of the WET road surface. By using these GA kernels $K_D$ (X, $Y_{DSV}$) and $K_W$ (X, $Y_{WSV}$), time-series waveforms with different time lengths can directly be compared.

Incidentally, as described above, even in a case where the number n of the time-series waveforms in the time windows when obtaining the feature vector $X_i$ and the number m of the time-series waveforms in the time windows when obtaining the road surface feature vector $Y_{Aj}$ are different, a degree of similarity between the feature vector Xi and the reference feature vector $Y_{ASVj}$ can be obtained.

The road surface determining means 17 determines the road surface state based on a value of the discriminant function $f_{DW}$ (x) using the kernel function $K_D$ (X, Y) and the kernel function $K_W$ (X, Y) shown in the following equation (5).

[Math 3]

$$f_{DW} = \sum_{\alpha=1}^{N_{DSV}} \lambda_{D\alpha} z_{D\alpha} K_D (X, Y_{DSV_\alpha}) - b_D + \sum_{\alpha=1}^{N_{WSV}} \lambda_{W\alpha} z_{W\alpha} K_W (X, Y_{WSV_\alpha}) - b_W \quad \cdots\cdots (5)$$

Here, $N_{DSV}$ is the number of the reference feature vectors $Y_{DSVj}$ of the DRY road surface and $N_{WSV}$ is the number of the reference feature vectors $Y_{WSVj}$ of the WET road surface.

In the present exemplary embodiment, the discriminant function $f_{DW}$ is calculated and if $f_{DW} > 0$, it is determined that the road surface is the DRY road surface, and if $f_{DW} < 0$, it is determined that the road surface is the WET road surface.

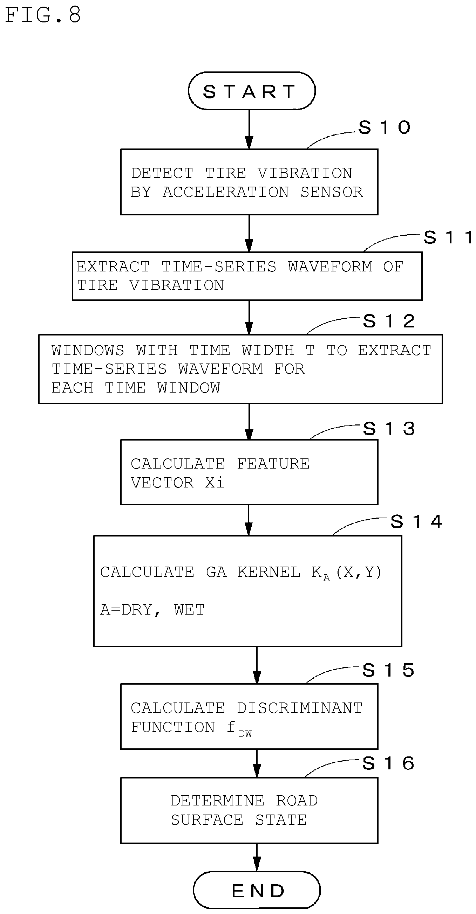

Next, an explanation is given, by referring to the flowchart of FIG. 8, on the method for determining a state of a road surface on which the tire 20 is running, with the use of the road surface state determining device 10.

First of all, a tire vibration, which is generated due to an input from a road surface R on which the tire 20 is running, is detected by the acceleration sensor 11 (Step 10), a time-series waveform of the tire vibration is extracted from a signal of the detected tire vibration (Step 11).

Then, the extracted time-series waveform of the tire vibration is windowed with a previously set time width T, and a time-series waveform of the tire vibration in each time window is obtained. Here, the number of the time-series waveforms of the tire vibration in the respective time windows is set to m (Step 12).

Next, the feature vectors $X_i = (x_{i1}, x_{i2}, x_{i3})$ are calculated for each of the extracted time-series waveforms in each time window (Step 13). In the present exemplary embodiment, the time width T is set to 3 msec. Further, the number of the feature vectors $X_i$ is six (6).

Each component $x_{i1}$ - $x_{i3}$ (i = 1-6) of the feature vector $X_i$ is, as described above, the power value of the filter filtration wave of the time-series waveform of the tire vibration.

Next, from the calculated feature vectors $X_i$ and the reference feature vectors $Y_{ASVj}$ of the DRY road surface and the WET road surface stored in the storage means 15, the local kernels $\kappa_{ij}$ ($X_i$, $Y_{ASVj}$) are calculated and thereafter a total sum of the local kernels $\kappa_{ij}$ ($X_i$, $Y_{ASVj}$) is obtained, and each of the GA kernel functions $K_A$ (X, $Y_{ASV}$) is calculated (Step 14).

The kernel function $K_D$ (X, $Y_{DSV}$) in which A = D is the GA kernel function of the DRY road surface and the kernel function $K_w$ (X, $Y_{WSV}$) in which A = W is the GA kernel function of the WET road surface.

Then, the discriminant function $f_{DW}$ (x) using the GA kernel function $K_D$ of the DRY road surface and the GA kernel function $K_W$ of the WET road surface is calculated (Step 15), and if $f_{DW} > 0$, it is determined that the road surface is the DRY road surface, and if $f_{DW} < 0$, it is determined that the road surface is the WET road surface (Step 16).

In this manner, in the present exemplary embodiment, it is so arranged that the time-series waveform of the tire vibration detected by the acceleration sensor 11 is windowed by the windowing means 13, the time-series waveform of the tire vibration in each time window is extracted to calculate the feature vector $X_i$. Thereafter, the kernel functions $K_A$ (X, $Y_{ASVj}$) of the feature vector $X_i$ and the reference feature vector $Y_{ASVj}$ of each road surface are obtained, and from a value of the discriminant function $f_{DW}$ (X) using these kernel functions $K_A$ (X, $Y_{ASVj}$), a road surface state of the road surface on which the tire 20 is running is determined. With this arrangement, the road surface state can be determined without detecting a peak position and without measuring a tire speed.

Furthermore, because the feature amount to be used for calculation of the kernel function is limited only to a high-frequency component, the amount of calculation can be reduced, and because a feature amount having a large difference between the DRY road surface and the WET road surface is used as the feature amount, the precision in determination of two road surfaces of DRY/WET can also be improved.

Table 1 is a table showing comparison between a data storage capacity when frequency bands of the feature vector $X_i$ and the road surface feature vector $Y_{Aj}$, which are the feature amounts, are high frequency bands (2-5 kHz) and a data storage capacity when the frequency bands are all of the frequency bands (0-5 kHz).

As apparent from the table, by setting the frequency bands of the feature amounts to be extracted to the high frequency band (2-5 kHz), data storage capacity was reduced to 44% of the data storage capacity when all of the frequency bands (0-5 kHz) are used.

[Table 1]

| Frequency Band | Data Storage Capacity | Ratio |
|---|---|---|
| All Bands (0-5 kHz) | 14.7 MB | 100% |
| High Frequency (2-5 kHz) | 6.4 MB | 44% |

With this, it has been confirmed that when the feature amount to be used for calculation of the kernel function is limited only to a high-frequency component, the amount of calculation can be reduced, and also the precision in determination of two road surfaces of DRY/WET can be improved.

Furthermore, because determination of the road surface can be performed regardless of a ground contact length, a robustnesss can be improved.

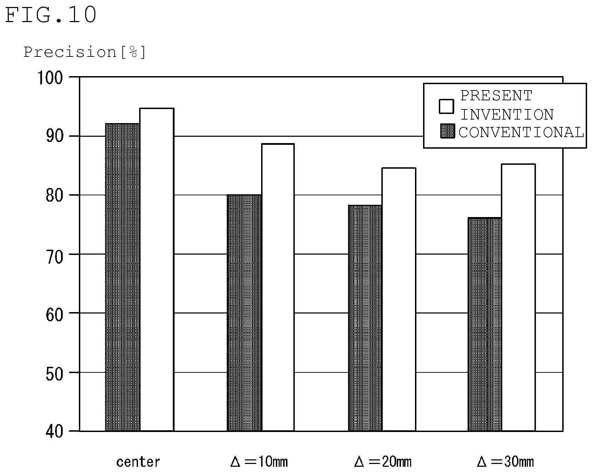

As a concrete example of robustnesss improvement, a result of search of degradation of precision in determination of two road surfaces of DRY/WET depending on the attachment position of the acceleration sensor 11 is shown by the graph in Fig. 10.

In the graph, the horizontal axis represents sensor positions and $\Delta$ is an amount (mm) of deviation from a tire width direction center (center), and the vertical axis represents a road surface determination precision (%).

As apparent from the graph, it is noticed that in the present invention, when the frequency band of the feature amount is in the high frequency band, degradation of the determination precision due to deviation of the sensor position can be more effectively controlled, compared to a case where the frequency band of the feature amount is in all the frequency bands (0-5 kHz).

In the present exemplary embodiment, the frequency bands of the feature vectors $X_i$ were 2-5 kHz and, the feature vectors $X_i$ to be calculated were set to vibration levels (the power value of the filter filtration wave) $a_{ik}$ (k = 1-3) of the specific frequency bands obtained by allowing the time-series waveforms of the tire vibration to pass through respective band filters of 2-3 kHz, 3-4 kHz and 4-5 kHz. However, the frequency bands of the feature vectors $X_i$ to be extracted are not limited to these bands, the frequency bands for extracting the feature vectors Xi may be changed such that, for example, the frequency bands are set to 0.5-5 kHz and the feature vectors Xi are of the power values of five filter filtration waves of 0.5-1 kHz, 1-2 kHz, 2-3 kHz, 3-4 kHz and 4-5 kHz. In short, it is sufficient to set the frequency bands for extracting the feature vectors Xi to 500 Hz or greater which is suitable for determining whether the road surface on which the tire is running is the DRY road surface or the WET road surface.

In the present exemplary embodiment, the tire vibration detecting means is the acceleration sensor 11, however, other vibration detecting means such as a pressure sensor may be used. Further, with respect to the mounting position of the acceleration sensor 11, one acceleration sensor 11 may be disposed at each of positions separated by a predetermined distance in the width direction from the center of the tire width direction, or may be disposed at other position such as inside of a block. Furthermore, the number of the acceleration sensor 11 is not limited to one, but may be disposed at plural positions in the tire circumferential direction.

In the present exemplary embodiment, the feature vector Xi is set to the power value $x_{ik}$ of the filter filtration wave, however, time-varying variance (log $[x_{ik}(t)^2 + x_{ik}(t-1)^2]$ of the power value $x_{ik}$ of the filter filtration wave may be used. Or, the feature vector Xi may be a Fourier coefficient that is a vibration level of the specific frequency band when the time-series waveform of the tire vibration is subjected to Fourier conversion, or may be a Cepstrum coefficient. The Cepstrum coefficient can be obtained by assuming the Fourier-converted waveform to be the spectrum waveform and again Fourier converting the Fourier-converted waveform, or assuming an AR spectrum to be the waveform and further obtaining an AR coefficient (LPC Cepstrum). This enables to characterize the shape of the spectrum without being affected by the absolute level, and therefore, the determination precision is improved compared to a case where the frequency spectrum obtained by Fourier conversion is used.

In the present exemplary embodiment, the feature vector $X_i$ is obtained by extracting the time-series waveform of the road surface region from the time-series waveform of the tire vibration, however, as illustrated in Fig. 9, because the influence to the vibration level due to the collision with the water curtain on the road surface is most significant in the pre-step-in region $R_f$, if the feature vector $X_i$ is obtained by multiplying the time-series waveform in the pre-step-in region $R_f$ by the window function and by extracting the time-series waveform in each time window, the amount of calculation can further be reduced.

In the present exemplary embodiment, determination of two road surfaces of DRY/WET is performed, however, the present invention may be applied, not only to determination of the two road surfaces, but also to determination of four road surfaces of DRY/WET/ICE/SNOW and so on.

In the present exemplary embodiment, the GA kernel is used as the kernel function, however, a dynamic time warping kernel function (DTW kernel) may be used. Or, the GA kernel and a DTW kernel arithmetic value may be used.

Although the present invention has been described using the exemplary embodiment, the present invention can also be described as follows. That is, the present invention provides a method for determining a state of a road surface being in contact with a running tire, the method including: a step (a) of detecting vibration of the running tire with the use of a vibration detecting means provided inside of the tire; a step (b) of taking out a time-series waveform of the detected tire vibration; a step (c) of extracting a time-series waveform for each time window by multiplying the time-series waveform of the tire vibration by a window function of a predetermined time width; a step (d) of calculating a feature amount from the time-series waveform in each time window; a step (e) of calculating a kernel function from the feature amount in each time window calculated in the step (d) and a reference feature amount selected from feature amounts in the respective time windows calculated from a time series waveform of tire vibration obtained in advance for each road surface state,; and a step (f) of determining the state of the road surface based on a value of a discriminant function using the kernel function, in which the feature amount in each time window calculated in the step (d) and the reference feature amount are either one of, or a plurality of, or all of a vibration level of a frequency band of 500Hz or greater extracted from the time-series waveform in each time window, a time-varying dispersion of the vibration level of the frequency band, and a Cepstrum coefficient of the time-series waveform; and in which the step (f) includes determining whether the state of the road surface is a WET state in which a water curtain that collides with the running tire exists on the road surface, or a DRY state in which the water curtain does not exist.

More specifically, the "reference feature amount" is obtained by machine learning (SVM) using, as learning data, the feature amount in each time window calculated from the time-series waveform of tire vibration obtained in advance for each of road surface states.

In this way, as the feature amount used in calculation of the kernel function, since only a vibration level of a high-frequency component of 500 Hz or greater extracted from the time-series waveform in each time window is used, the amount of calculation can be reduced and the calculation speed can be improved. Further, since a feature amount having a large difference between the DRY road surface and the WET road surface is used as the feature amount, it is also possible to improve the precision in determination of two road surfaces of DRY/WET.

Furthermore, since as the kernel function, the global alignment kernel function, or the dynamic time warping kernel function, or the arithmetic value of the kernel function is used, the precision in determination of the road surface state was improved.

Further, because the windowing means windows the time-series waveform of the pre-step-in including the step-in point, in which the vibration level of the frequency band of 500 Hz or greater becomes higher in particular, to extract the time-series waveform in each time window, the amount of calculation was further improved while the precision in determination of two road surfaces of DRY/WET was sufficiently secured.

Further, the present invention provides a road surface state determination device for determining a state of a road surface being in contact with a running tire, the device including: a tire vibration detecting means that is disposed on an air chamber side of an inner liner portion of a tire tread portion and that detects vibration of the running tire; a windowing means that windows, with a previously set time width, a time-series waveform of the tire vibration detected by the tire vibration detecting means to extract a time-series waveform of the tire vibration for each time window; a feature amount calculating means that calculates a feature amount having, as a component thereof, a vibration level of a specific frequency in the extracted time-series waveform in each time window, or a feature amount having, as a component thereof, a function of the vibration level of the specific frequency; a storage means that stores a reference feature amount selected from feature amounts in respective time windows calculated from a time-series waveform of tire vibration that has been calculated in advance for each road surface state; a kernel function calculating means that calculates a kernel function from the feature amount in each time window calculated by the feature amount calculating means and the reference feature amount stored in the storage means; and a road surface state determining means that determines the state of the road surface based on a value of a discriminant function using the kernel function, in which the feature amount in each time window calculated by the feature amount calculating means and the reference feature amount stored in the storage means are either one of, or a plurality of, or all of a vibration level of a frequency band of 500Hz or greater extracted from the time-series waveform in each time window, a time-varying dispersion of the vibration level of the frequency band and a Cepstrum coefficient of the time-series waveform; and in which the road surface state determining means determines whether the state of the road surface is a WET state in which a water curtain that collides with the running tire exists on the road surface, or a DRY state in which the water curtain does not exist.

With such a configuration mentioned above, it is possible to realize a road surface state determination device that is capable of reducing the amount of calculations and that is capable of determining two road surfaces of DRY/WET with a high precision.

REFERENCE SIGN LIST

10: Road surface state determination device, 11: Acceleration sensor, 12: Vibration waveform detecting means, 13: Windowing means, 14: Feature vector calculating means, 15: Storage means, 16: Kernel function calculating means, 17: Road surface state determining means, 20: Tire, 21: Inner liner portion, and 22: Tire air chamber.

**Claims**

1. A method for determining a state of a road surface being in contact with a running tire, the method comprising:

   a step (a) of detecting vibration of the running tire with the use of a vibration detecting means provided inside of the tire;

a step (b) of taking out a time-series waveform of the detected tire vibration;

a step (c) of extracting a time-series waveform for each time window by multiplying the time-series waveform of the tire vibration by a window function of a predetermined time width;

a step (d) of calculating a feature amount from the time-series waveform in each time window;

a step (e) of calculating a kernel function from the feature amount in each time window calculated in the step (d) and a reference feature amount selected from feature amounts in the respective time windows calculated from a time series waveform of tire vibration obtained in advance for each road surface state,; and

a step (f) of determining the state of the road surface based on a value of a discriminant function using the kernel function,

wherein the feature amount in each time window calculated in the step (d) and the reference feature amount are either one of, or a plurality of, or all of a vibration level of a frequency band of 500Hz or greater extracted from the time-series waveform in each time window, a time-varying dispersion of the vibration level of the frequency band, and a Cepstrum coefficient of the time-series waveform; and

wherein the step (f) includes determining whether the state of the road surface is a WET state in which a water curtain that collides with the running tire exists on the road surface, or a DRY state in which the water curtain does not exist.

2. The method according to Claim 1, wherein the kernel function is either a global alignment kernel function, or a dynamic time warping kernel function, or an arithmetic value of the kernel function.

3. The method according to Claim 1 or 2, wherein, the windowing means extracts the time-series waveform in each time window by multiplying a pre-step-in time-series waveform by a window function.

4. A road surface state determination device for determining a state of a road surface being in contact with a running tire, the device comprising:

a tire vibration detecting means that is disposed on an air chamber side of an inner liner portion of a tire tread portion and that detects vibration of the running tire;

a windowing means that windows, with a previously set time width, a time-series waveform of the tire vibration detected by the tire vibration detecting means to extract a time-series waveform of the tire vibration for each time window;

a feature amount calculating means that calculates a feature amount having, as a component thereof, a vibration level of a specific frequency in the extracted time-series waveform in each time window, or a feature amount having, as a component thereof, a function of the vibration level of the specific frequency;

a storage means that stores a reference feature amount selected from feature amounts in respective time windows calculated from a time-series waveform of tire vibration that has been calculated in advance for each road surface state;

a kernel function calculating means that calculates a kernel function from the feature amount in each time window calculated by the feature amount calculating means and the reference feature amount stored in the storage means; and

a road surface state determining means that determines the state of the road surface based on a value of a discriminant function using the kernel function,

wherein the feature amount in each time window calculated by the feature amount calculating means and the reference feature amount stored in the storage means are either one of, or a plurality of, or all of a vibration level of a frequency band of 500Hz or greater extracted from the time-series waveform in each time window, a time-varying dispersion of the vibration level of the frequency band and a Cepstrum coefficient of the time-series waveform; and

wherein the road surface state determining means determines whether the state of the road surface is a WET state in which a water curtain that collides with the running tire exists on the road surface, or a DRY state in which the water curtain does not exist.

FIG.1

10 ROAD SURFACE
STATE DETERMINATION DEVICE

ACCELERATION SENSOR — 11

VIBRATION WAVEFORM EXTRACTING MEANS — 12

WINDOWING MEANS — 13

FEATURE DATA CALCULATING MEANS — 14

STORAGE MEANS — 15
$Y_{DSV}, \lambda_D$
$Y_{WSV}, \lambda_W$

KERNEL FUNCTION CALLCULATING MEANS — 16

ROAD SURFACE STATE DETERMINING MEANS — 17

FIG.2

20
22
21
11

FIG.3

FIG.4

FIG.5

FIG.6

FIG.7

EP 3 640 685 A1

| | | | | | | | |
|---|---|---|---|---|---|---|---|
| | $x_{\beta 1}$ | $\kappa(x_{\alpha 1}, x_{\beta 1})$ | $\kappa(x_{\alpha 2}, x_{\beta 1})$ | $\kappa(x_{\alpha 3}, x_{\beta 1})$ | $\kappa(x_{\alpha 4}, x_{\beta 1})$ | $\kappa(x_{\alpha 5}, x_{\beta 1})$ | $\kappa(x_{\alpha 6}, x_{\beta 1})$ |
| | $x_{\beta 2}$ | $\kappa(x_{\alpha 1}, x_{\beta 2})$ | $\kappa(x_{\alpha 2}, x_{\beta 2})$ | $\kappa(x_{\alpha 3}, x_{\beta 2})$ | $\kappa(x_{\alpha 4}, x_{\beta 2})$ | $\kappa(x_{\alpha 5}, x_{\beta 2})$ | $\kappa(x_{\alpha 6}, x_{\beta 2})$ |
| | $x_{\beta 3}$ | $\kappa(x_{\alpha 1}, x_{\beta 3})$ | $\kappa(x_{\alpha 2}, x_{\beta 3})$ | $\kappa(x_{\alpha 3}, x_{\beta 3})$ | $\kappa(x_{\alpha 4}, x_{\beta 3})$ | $\kappa(x_{\alpha 5}, x_{\beta 3})$ | $\kappa(x_{\alpha 6}, x_{\beta 3})$ |
| | $x_{\beta 4}$ | $\kappa(x_{\alpha 1}, x_{\beta 4})$ | $\kappa(x_{\alpha 2}, x_{\beta 4})$ | $\kappa(x_{\alpha 3}, x_{\beta 4})$ | $\kappa(x_{\alpha 4}, x_{\beta 4})$ | $\kappa(x_{\alpha 5}, x_{\beta 4})$ | $\kappa(x_{\alpha 6}, x_{\beta 4})$ |
| | | $x_{\alpha 1}$ | $x_{\alpha 2}$ | $x_{\alpha 3}$ | $x_{\alpha 4}$ | $x_{\alpha 5}$ | $x_{\alpha 6}$ |

FIG.8

```
                        ┌─────────────┐
                        │   START     │
                        └──────┬──────┘
                               │              ╭─ S10
                               ▼
              ┌────────────────────────────────┐
              │ DETECT TIRE VIBRATION          │
              │ BY ACCELERATION SENSOR         │
              └────────────────┬───────────────┘
                               │              ╭─ S11
                               ▼
              ┌────────────────────────────────┐
              │ EXTRACT TIME-SERIES WAVEFORM OF│
              │ TIRE VIBRATION                 │
              └────────────────┬───────────────┘
                               │              ╭─ S12
                               ▼
              ┌────────────────────────────────┐
              │ WINDOWS WITH TIME WIDTH T TO   │
              │ EXTRACT TIME-SERIES WAVEFORM   │
              │ FOR EACH TIME WINDOW           │
              └────────────────┬───────────────┘
                               │              ╭─ S13
                               ▼
              ┌────────────────────────────────┐
              │ CALCULATE FEATURE              │
              │ VECTOR Xi                      │
              └────────────────┬───────────────┘
                               │              ╭─ S14
                               ▼
              ┌────────────────────────────────┐
              │ CALCULATE GA KERNEL KA(X,Y)    │
              │ A=DRY, WET                     │
              └────────────────┬───────────────┘
                               │              ╭─ S15
                               ▼
              ┌────────────────────────────────┐
              │ CALCULATE DISCRIMINANT         │
              │ FUNCTION fDW                   │
              └────────────────┬───────────────┘
                               │              ╭─ S16
                               ▼
              ┌────────────────────────────────┐
              │ DETERMINE ROAD                 │
              │ SURFACE STATE                  │
              └────────────────┬───────────────┘
                               │
                               ▼
                        ┌─────────────┐
                        │    END      │
                        └─────────────┘
```

- S10 DETECT TIRE VIBRATION BY ACCELERATION SENSOR
- S11 EXTRACT TIME-SERIES WAVEFORM OF TIRE VIBRATION
- S12 WINDOWS WITH TIME WIDTH T TO EXTRACT TIME-SERIES WAVEFORM FOR EACH TIME WINDOW
- S13 CALCULATE FEATURE VECTOR Xi
- S14 CALCULATE GA KERNEL $K_A(X,Y)$, A=DRY, WET
- S15 CALCULATE DISCRIMINANT FUNCTION $f_{DW}$
- S16 DETERMINE ROAD SURFACE STATE

FIG.9

EP 3 640 685 A1

FIG.10

## INTERNATIONAL SEARCH REPORT

| | International application No. |
|---|---|
| | PCT/JP2018/017083 |

**A. CLASSIFICATION OF SUBJECT MATTER**
Int.Cl. G01W1/00(2006.01)i, B60C19/00(2006.01)i, B60W40/068(2012.01)i

According to International Patent Classification (IPC) or to both national classification and IPC

**B. FIELDS SEARCHED**

Minimum documentation searched (classification system followed by classification symbols)
Int.Cl. G01W1/00, B60C19/00, B60W40/068

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-035279 A (BRIDGESTONE CORPORATION) 24 February 2014, paragraphs [0013]–[0026] & US 2015/0210286 A1, paragraphs [0019]–[0077] & WO 2014/025018 A1 & EP 2883772 A1 & CN 104540717 A & RU 2015108058 A | 1–4 |
| Y | JP 2011-046256 A (BRIDGESTONE CORPORATION) 10 March 2011, paragraphs [0021], [0026], fig. 4 (Family: none) | 1–4 |
| Y | JP 2002-039854 A (BRIDGESTONE CORPORATION) 06 February 2002, paragraph [0015] (Family: none) | 1–4 |
| A | US 2007/0050121 A1 (AMMON, Dieter et al.) 01 March 2007, paragraphs [0026]–[0030] & WO 2005/095173 A1 & DE 102004016288 B3 | 1–4 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 June 2018 (19.06.2018) | 03 July 2018 (03.07.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**EP 3 640 685 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014035279 A